# EUROPEAN PATENT APPLICATION

(11) **EP 0 597 808 A1**
(43) Date of publication of application: **18.05.1994**
(21) Application number: 93830166.0
(22) Date of filing: 20.04.1993
(51) Int. Cl.: B60N 2/48

(54) **Heardrest support rod for motor vehicle seats**

(30) Priority: 27.10.1992 IT TO920862
(71) Applicant: GESTIND-M.B." MANIFATTURA DI BRUZOLO" S.P.A, I-10050 Bruzolo (Torino) (IT)
(72) Inventor: De Filippo, Emilio, I-10050 Bruzolo (Torino) (IT)
(74) Representative: Buzzi, Franco

(57) **Abstract**

Headrest support rod (1) for motor-vehicle seats, comprising a first and a second rod element (2, 3) connected to each other by means of an articulated joint (4) to which an outer protection body connected to the rod (1) is associated. The protection body is constituted by a rigid shell (13) formed by two half-shells (14, 15) connected to each other by means of a restrained joint and defining at one end a tubular part (20) for the axial anchoring to the first rod element (2), and at the opposite end a base with a rounded surface (21) having an elongated opening (22) through which the second rod element is freely projecting.

## Description

The present invention is related to support rods for motor-vehicle headrests, of the type comprising a first rod element adapted to be coupled in a slidably adjustable way with a headrest frame, and a second rod element adapted to be fixed onto a seat backrest, and wherein the said first and second rod elements are connected to each other by means of an articulated joint to which an outer protection body, connected to the rod, is associated.

Support rods of the above-mentioned type are currently employed by the Applicant in the production of headrests of the type in which the height adjustment of the headrest cushion is performed by sliding the frame relative to a pair of said support rods, and the inclination adjustment of the cushion is obtained by swinging the first rod elements relative to the second rod elements. In the mounted condition of the headrest onto a motor-vehicle seat backrest, the articulated joint between the first and second rod elements is placed immediately above the top surface of the backrest, and the protection body associated to each rod normally performs a simple aesthetic covering function of the said articulated joint.

Traditionally the protection body is constituted by a flexible shroud, normally an elastomeric material bellow, which however is not able to prevent in use accidental contacts of the user's head against the mutually articulated parts of the rod elements in case of accident, with risks of injury. In this connection, according to a specific safety requirement the portions of the support rods comprised between the seat backrest top and the headrest cushion, and accessible from the outside, should have no sharp corners or in any case curvature radiuses lower than a predetermined value. Normally the ends of mutual articulated connection between the two rod elements are instead formed with respective stop members for limiting the angular displacement of the headrest, and such stop members are subject to be contacted from outside owing to flexibility of the protection body.

The object of the present invention is to overcome the above drawback, and to provide a support rod for motor-vehichle headrests of the type set forth at the beginning, which is adapted to prevent, in a simple and efficient way, any risks of contact and interference with the areas of the two support rod elements corresponding to their articulated joint.

According to the invention, this object is achieved by virtue of the fact that the said protection body is constituted by a rigid shell formed by two moulded plastic-material symmetrical half-shells connected to each other by means of a restrained joint and defining at one end a tubular part for the axial anchoring to the first rod element, and at the opposed end a base having an elongated opening through which the second rod element is freely projecting.

According to a preferred embodiment of the invention, the rigid shell has a generally frusto-pyramidal shape with rounded edges and the base thereof, which in use is adapted to rest upon the top of a seat backrest, has a convex outer surface.

Normally the articulated joint between the said first and second rod elements comprises a transverse pivot pin. In such a case the invention contemplates the additional feature according to which the two half-shells are innerly formed with respective positioning seats for housing the ends of the pivot pin.

Further features of the invention will become apparent in the following detailed description, with reference to the annexed drawings provided by pure way of non limiting example, wherein:

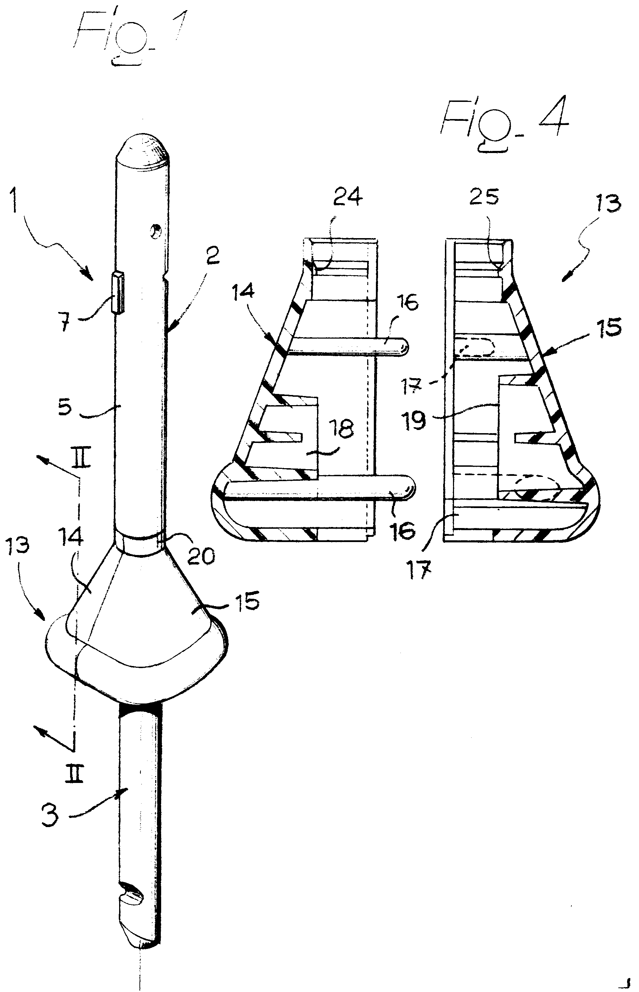

- figure 1 is a diagrammatic perspective view of a headrest support rod according to the invention,
- figure 2 is a partially sectioned view along line II-II of figure 1,

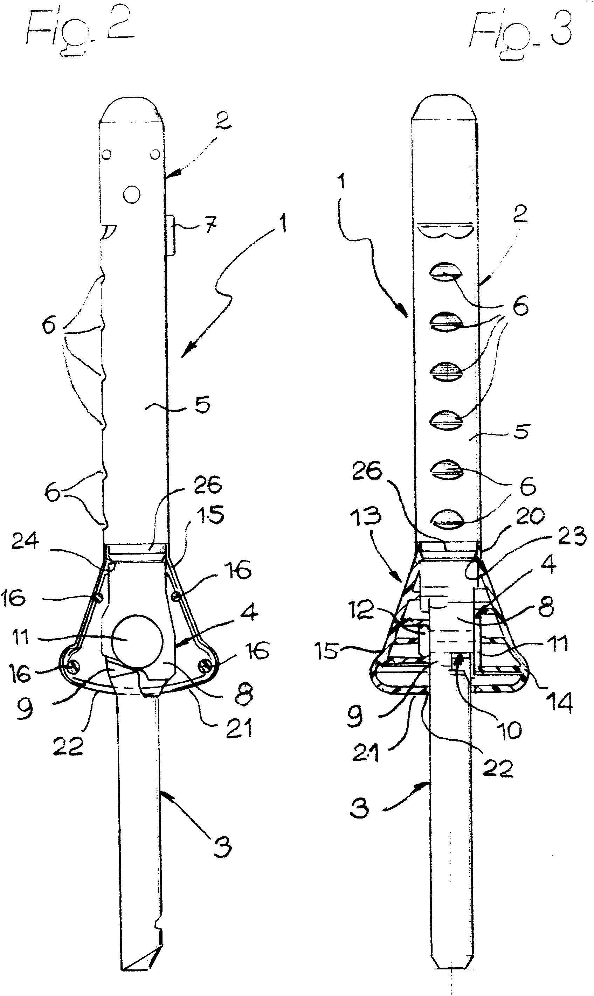

- figure 3 is a partially sectioned view offset of 90° with respect to figure 2, and
- figure 4 is a sectioned view of one component of the support rod in disassembled condition.

Referring to the drawings, reference numeral 1 designates as a whole a support rod for motor-vehicle headrests, essentially constituted by a first rod element or upper element 2 and by a second rod element or lower element 3, articulated to each other by means of an articulated joint 4.

The upper rod element 2 is formed, in a known way, by a metal core (not shown in the drawings) on which a plastic material hollow body 5 is overmoulded, formed on one side with a series of positioning notches 6 and on the opposite sides with a key appendage 7, as well as with a lower annular groove 26.

The rod element 2 is intended to be slidably fitted within a respective tubular upright of a frame made by moulded plastic material and which in turn is incorporated in a known way within a headrest cushion.

The positioning notches 6 cooperate, also in a known way, with a fixing elastic member by which the headrest can be positioned in any selected height position relative to a pair of a support rods.

The lower rod element 3 is adapted to be fixed, in a known way, onto the top of the backrest of a motor-vehicle seat, in such a position that the articulated joint 4 is placed immediately above the top surface of the backrest.

The articulated joint 4 is constituted, also in a known way, by respective flat ends 8, 9 of the rod element 2 and of the rod element 3, respectively, formed with respective cooperating stop members for limiting the mutual rotation between the two rod elements 2, 3 (and thus the oscillation of the headrest relative to the seat backrest), and crossed by a pivot pin 10 having on one end an enlarged head 11 and on the opposite end a riveted terminal part 12.

Reference numeral 13 generally designates an outer body for the protection of the articulated joint 4 which, according to the invention, is formed by a rigid shell made by moulded plastic material having a generally frusto-pyramidal shape with rounded edges. Actually, the protection body 13 is constituted by two simmetrical half-shells 14, 15 connected to each other by means of a restrained joint: to such extent, the half-shell 14 is provided internally with transverse pins 16 projecting towards the other half-shell 15 so as to engage under a pressure or snap fitting corresponding holes 17 of the latter.

Moreover the two half-shells 14 and 15 are formed interiorly with respective seats 18, 19 having a shape complementary to that of the riveted end 12 and of the enlarged head 11, respectively, of the pivot pin 10.

In the assembled condition of the two half-shells 14 and 15, the protection body 13 defines superiorly a tubular anchoring part 20 and inferiorly a base 21 having a rounded convex outer surface and in which an elongated opening 22 is formed.

The tubular part 20 is provided interiorly with an annular projection 23 defined by corresponding half-annular ribs 24, 25 formed on the half-shell 14 and on the half-shell 15, respectively.

For the mounting of the protection body 13 on the support rod 1, initially the two half-shells 14, 15 are placed on opposite sides of the rod 1 in correspondence of the articulated joint 4, with the half-shell 15 on the side of the enlarged head 11 and the half-shell 14 on the side of the riveted end 12 of the pin 10. Thereafter the two half-shells 14, 15 are drawn near to each other, thus engaging the pins 16 within the holes 17 and the half annular projections 24, 25 within the peripheral groove 26 of the rod element 2. The half-shells 14 and 15 are then locked relative to each other by performing their mutual forced coupling.

In the assembled condition the protection shell 13 is axially anchored to the rod element 2 by means of the annular rib 23 inserted within the peripheral groove 26, with the enlarged head and the riveted end 12 of the pin 10 housed in the seat 19 and in the seat 18, respectively, and with the rod element 3 freely extending across the elongated opening 22.

In the mounted condition of the headrest onto the backrest of a motor-vehicle seat, the headrest, and thus the rod elements 2 of two respective support rods 1, can swing relative to the rod elements 3, trailing during their angular displacement the respective protection bodies 13, the convex bases 21 of which move in close proximity to or in contact with the top surface of the backrest. The articulated joint 4 of the two support rods 1 are thus efficiently covered and inaccessible in any angular and height adjustment position of the headrest, therefore preventing dangerous consequences deriving in use from possible accidental impact by the user.

Naturally the details of construction and the embodiments tails of construction and the embodiments may be widely varied with respect to what has been disclosed and illustrated, without thereby departing from the scope of the present invention, such as defined in the appended claims.

## Claims

1. Headrest support rod (1) for motor-vehicle seats, comprising a first rod element (2) adapted to be coupled in a slidably adjustable way to a headrest frame, and a second rod element (3) intended to be fixed onto a seat backrest, and wherein the said first and second rod elements (2, 3) are connected to each other by means of an articulated joint (4) to which an outer protection body (13), connected to the support rod, is associated (1), characterized in that the said protection body is constituted by a rigid shell (3) formed by two symmetrical half-shells (14, 15) made of moulded plastic material, connected to each other by means of a restrained joint and defining at one end a tubular part (20) for the axial anchoring to the first rod element (2), and at the opposite end a base (21) having an elongated opening (22) through which the second rod element (3) is freely projecting.

2. Support rod according to claim 1, characterized in that the base (21) of the protection shell (13) has an outer rounded convex surface.

3. Support rod according to claim 1 or claim 2, characterized in that the protection shell (13) has a substantially frusto-pyramidal shape with rounded edges.

4. Support rod according to any of the preceeding claims, characterizing in that the connection between the two half-shells (14, 15) of the protection shell (13) is performed by means of pins and holes (16, 17) for mutual forced engagement.

5. Support rod according to any of the preceeding claims, characterized in that the said anchoring tubular part (20) of the protection shell (13) is formed by an inner annular rib (23) engaging an outer annular complementary groove (26) of the first rod element (2).

6. Support rod according to the preceeding claims, wherein the articulated joint (4) between the said first and second rod elements (2, 3) comprises a transverse pivot pin (10), characterized in that the two half-shells (14, 15) of the protection shell (13) are innerly formed with respective positioning seats (18, 19) for housing the ends (11, 12) of the pivot pin (10).
